# EUROPÄISCHE PATENTANMELDUNG

(11) **EP 3 002 508 A1**
(43) Veröffentlichungstag der Anmeldung: **06.04.2016**
(21) Anmeldenummer: 14187037.8
(22) Anmeldetag: 30.09.2014
(51) Int. Cl.: F21V 8/00

(54) **Lichtverbundsystem für die Verwendung in ultradünnen Leuchten und Back Light Units**

(71) Anmelder: Evonik Röhm GmbH, 64293 Darmstadt (DE)
(72) Erfinder: Parusel, Markus, 64409 Messel (DE); Groothues, Herbert, 60528 Frankfurt (DE); Kogler, Dr. Franz René, 64405 Fischbachtal (DE)

(57) **Zusammenfassung**

Die vorliegende Erfindung betrifft eine verbesserte Lichtleitfolie zur flächigen Lichtauskopplung auf Basis eines mindestens fünfschichtigen neuartigen Aufbaus. Mit diesem neuartigen Aufbau ist es insbesondere möglich, Licht aus so genannten Mikro-LEDs einzukoppeln und sowohl sehr gleichmäßig als auch in einem hohen Wirkungsgrad wieder auszukoppeln. Insbesondere besteht die Lichtleitfolie dabei aus Schichten A, B und C sowie dazwischen liegenden strukturiert aufgedruckten, farblosen Thermoplasten oder Reactive Hotmelts. Dabei besteht keine feste direkte Verbindung zwischen der Reflektorfolie und der transparenten Platte.

## Beschreibung

### Gebiet der Erfindung

Lichtleitplatten, z.B. in Back Light Units (BLUs) oder Lichtpaneelen, haben eine möglichst homogene Dicke und bestehen aus farblos transparenten Materialien. Hierbei wird Licht z.B. von LED oder CCFL Leuchtquellen über eine oder mehrere Kanten der Lichtleitplatte eingespeist. Auf mindestens einer Oberfläche der Lichtleitplatte befindet sich eine Struktur, die das Licht streut. Wenn ein Lichtstrahl auf diese Struktur trifft, wird dieser in einem kleineren Winkel als der Winkel der Totalreflexion gestreut und damit aus der Platte ausgekoppelt. Da das Licht zu beiden Seiten der Platte ausgekoppelt wird, befindet sich auf einer Seite meist eine weiße Reflektorfolie, die nicht mit der Platte in optischem Kontakt steht. Mit diesem Aufbau wird das Licht nur zur einen Seite ausgestrahlt bzw. umgelenkt. Die Dichte der lichtauskoppelnden Struktur nimmt mit zunehmender Entfernung von den Lichtquellen in der Regel zu. Dadurch erreicht man, dass das an der oder den Kanten eingekoppelte Licht gleichmäßig über die Oberflächen des Lichtleiters wieder ausgekoppelt wird.

Nach dem gleichen Prinzip sind auch moderne, ultradünne Leuchten konstruiert. Durch die dünne, flächige Konstruktion und die seitliche Lichteinspeisung ergeben sich bei der Verwendung solcher Leuchten vielfältige neuartige Designmöglichkeiten.

Die vorliegende Erfindung betrifft eine verbesserte Folie zur flächigen Lichtauskopplung auf Basis eines mindestens fünfschichtigen neuartigen Aufbaus. Mit diesem neuartigen Aufbau ist es insbesondere möglich, Licht aus so genannten Mikro-LEDs einzukoppeln und sowohl sehr gleichmäßig als auch in einem hohen Wirkungsgrad wieder auszukoppeln.

### Stand der Technik

Für das Aufbringen der auskoppelnden Struktur gibt es verschiedene technische Möglichkeiten, die entweder Offline an Plattenzuschnitten oder Inline während eines kontinuierlichen Herstellprozesses der Platten zum Einsatz kommen. Zu den Offlinemethoden zählt u.a. der Flachbettsiebdruck eines weißen, transluzenten oder opaken Lackes, die Lasergravur oder eine mechanische Bearbeitung mit einer CNC-Fräse. Bei den Inlinemethoden kommt zum Beispiel das Einprägen der Strukturen durch eine strukturierte Walze in einem Glättwerk an einem Plattenextruder zum Einsatz. Die Offlinemethoden haben vor allem den Nachteil, dass sie aufgrund des hohen Arbeitsaufwandes langsam und kostenintensiv sind. Weiterhin erhöht das Handling der Lichtleitplatten bei der Bedruckung die Gefahr einer Beschädigung der Oberfläche durch Kratzer und somit eines erhöhten Ausschusses. Die Strukturierung inline mit einer entsprechend strukturierten Walze im Glättwerk erfordert relativ hohe Investitionskosten für die Strukturierung der Walze. Auch ist das Metall, aus der die strukturierte Walzenoberfläche besteht, in der Regel deutlich weicher als eine verchromte Standardglättwalze, da es einfacher zu bearbeiten sein muss. Dadurch ergeben sich im Vergleich zu normalen Glättwalzen deutlich geringere Standzeiten für diese strukturierten Walzen, z.B. aufgrund von Beschädigungen oder Abnutzung. Zudem weisen strukturierte Walzen eine empfindlichere Oberfläche auf. Ein weiterer Nachteil ist die geringe Flexibilität bei der Inlineprägung bezüglich der Struktur. Die Prägestruktur muss individuell auf jedes Lichtpaneldesign angepasst werden, um eine gleichmäßige Lichtauskopplung zu erreichen. Bei einem Inlineprägeprozess kann ein Wechsel der Struktur nur erreicht werden, indem die Strukturwalze getauscht wird. Hierzu muss der gesamte Extrusionsprozess gestoppt werden. Ein solcher Wechsel dauert mehrere Stunden und ist mit hohen Kosten verbunden. Ein weiterer Nachteil des Inlineprägeverfahrens ist die Limitierung der Wiederholung einer Struktur auf den Umfang einer Glättwalze. Dadurch ist bei dieser Methode nur ein Gradient der Strukturdichte senkrecht zur Extrusionsrichtung praktikabel, da eine Anpassung des Umfangs einer Glättwalze an ein bestimmtes Lichtpanelformat oder BLU-Format nicht möglich ist.

DE 102009027288A1 offenbart eine Struktur zur Auskopplung des Lichtes aus einer Lichtleitplatte, die zunächst auf eine transparente Folie gedruckt wird. Diese Folie wird anschließend im Glättspalt eines Extruderglättwerks auf eine farblos transparente Platte laminiert. Die Vorteile liegen darin, dass der Druck der Strukturen auf einer Folie sehr einfach durchzuführen ist und die Folie die Struktur vor mechanischer Beschädigung schützt. Da die Folie aber auch als Lichtleiter fungiert, muss diese selbst durch mindestens eine weitere Schicht vor mechanischer Beschädigung geschützt werden. Zudem ist die Lichttransmission von farblos transparenten Folien im Allgemeinen schlechter als bei Lichtleitplatten. Letztere können aus optisch hochtransparentem PMMA hergestellt werden. Für dünne Folien ist ein farblos transparentes PMMA zu spröde. Man muss entweder bezüglich der Lichtleitung eher störende Schlagzähmodifier einsetzen, oder ein Polymer verwenden, das eine geringere Transparenz aufweist, wie z.B. PET oder Polycarbonat. In beiden Fällen wird die Lichtleitfunktion gegenüber einem reinen PMMA reduziert. Auch eine zusätzliche Reflektorfolie wird benötigt.

Gemäß DE 69914089 kann eine Reflektorfolie auch mit einem Kleber vollständig auf eine Lichtleitplatte auflaminiert werden. Die gesamte Reflektorfolie steht in optischen Kontakt zu der Lichtleitplatte. Um eine näherungsweise homogene Lichtauskopplung zu erreichen, müssen einzelne Streifen mit von der Lichtquelle zunehmendem Abstand breiter werdende Streifen auf die Lichtleitplatte geklebt werden. Damit lässt sich nicht die feine Struktur eines Druckmusters auf einer Folie realisieren und somit ist die Lichtauskopplung tendenziell inhomogen. Zum anderen lassen sich solche Streifen nur sehr schwer in einem Inlineverfahren exakt auf die Oberfläche laminieren. Weiterhin hat diese Erfindung den Nachteil, dass man dennoch eine zusätzliche Reflektorfolie hinter den aufgeklebten Streifen benötigt.

KR 20-2009-004295 beschreibt eine Reflektorfolie, die eine aufgedruckte Lichtleitstruktur aufweist. Die aufgedruckte Struktur besteht jedoch entweder aus zwei getrennten Schichten, bei denen es sich bei einer Schicht um einen Klebstoff und bei der anderen um eine diffuse Schicht handelt, oder aus einer Mischung aus Klebstoff und Diffuser. Zudem benötigt der Kleber einen sogenannten "Release-Liner", eine Folie, welche die Klebeschicht schützt und vor der Lamination entfernt werden muss. Damit unterliegt der Herstellprozess jedoch zusätzlichen Arbeitsschritten. Zudem birgt der Kleber, bei dem es sich in der Regel um einen Haftklebstoff handelt, den Nachteil, dass es nach einer längeren Nutzungsdauer zu einem Haftungsverlust kommen kann.

Lichtleitplatten nach Stand der Technik koppeln das Licht in der Regel mit einem Intensitätsmaximum in einem Winkel größer 60° aus (gemessen zur Oberflächennormalen der Lichtleitplatte). Um eine möglichst gleichmäßige Intensitätsverteilung über 0° bis 60°zu erzielen haben fast alle beschriebenen Systeme gemeinsam, dass insbesondere bei der Verwendung in Beleuchtungssystemen mit seitlich eingekoppelten LED-Licht, auf der Auskopplungsseite zusätzlich eine Streufolie oder-platte eingesetzt wird. Diese hat dabei keinen optischen Kontakt zur Lichtleitplatte. Damit ein besonders gleichmäßiges Lichtbild erzielt werden kann, ist es dabei nötig, dass diese Streuplatte bzw. -folie einen hohen Anteil Streupartikel aufweist. Dies hat jedoch den Nachteil, dass es zu Rückreflektionen und zu Streuungen in die Streufolie bzw. -platte kommt. Damit liegt für Systeme des Standes der Technik in Bezug auf die Lichtausbeute ein Optimierungsbedarf vor.

### Aufgabe

In Anbetracht des Standes der Technik lag somit der vorliegenden Erfindung die Aufgabe zugrunde, eine neuartige Lichtleitplatte zur Auskopplung von Licht zur Verfügung zu stellen, die dazu geeignet ist, Licht über die gesamte Auskopplungsfläche gleichmäßig und in hoher Ausbeute auszukoppeln. Insbesondere bestand die Aufgabe, dass das Licht mittels so genannten Mikro-LED eingekoppelt werden kann.

Ferner lag der Erfindung die Aufgabe zugrunde, dass diese Lichtleitplatte lange einsetzbar und kostengünstig herstellbar sein soll.

Weiterhin bestand die Aufgabe, die zur Streuung oder Umlenkung des Lichts aufgedruckten Störstellen so zu schützen, dass deren Beschädigung verhindert wird.

Weiterhin sollen die erfindungsgemäßen Lichtleitplatten in Lichtpaneelen, zur (ambienten) Beleuchtung z.B. im Automobilbereich oder in Back Light Units von LCD-Displays einsetzbar sein.

Darüber hinaus bestand die Aufgabe, die Lichtausbeute bei Verwendung einer Streuplattebzw. -folie auf der Auskopplungsseite der Lichtleitplatte zu steigern. Insbesondere bestand dabei die Aufgabe, das Licht mit einer gleichmäßigen Intensitätsverteilung zwischen 0 und 60° auszukoppeln, wobei in dieser Streuplatte bzw. -folie im Vergleich zum Stand der Technik eine deutlich geringere Menge Streupartikel nötig ist.

Gleichzeitig war es Aufgabe der vorliegenden Erfindung ein Verfahren zur Herstellung solcher Lichtleitplatten zur Verfügung zu stellen, das einfacher, kostengünstiger und nach Möglichkeit schneller durchzuführen ist, als die nach Stand der Technik bekannten Verfahren zur Herstellung von Lichtleitplatten.

Weiter nicht explizit genannte Aufgaben können sich aus dem Zusammenhang der vorliegenden Erfindung, wie z.B. aus der Beschreibung oder den Beispielen ergeben.

### Lösung

Im Folgenden werden die Begriffe Lichtleitfolie, Lichtleitplatte und Vorrichtung zum Transport von Licht synonym verwendet und bezeichnen die gesamte Folie, mindestens bestehend aus den Schichten A, A1, B, C1 und C. Nicht zu verwechseln damit ist die Bezeichnung Folie oder farblos transparente Folie, die ausschließlich den z.B. durch Extrusion hergestellte Schicht B der Lichtleitfolie umschreibt. Ebenfalls synonym zueinander werden im Folgenden die Begriffe gedruckter Thermoplast, Störstelle und Bedruckung verwendet.

Unter der Formulierung "optischer Kontakt" wird im Folgenden eine chemische Bindung oder eine physikalische Haftung zwischen zwei Schichten bzw. Grenzflächen verstanden. Ausdrücklich nicht erfasst von der Formulierung "optischer Kontakt" ist ein reines Aufliegen einer Schicht, insbesondere der Schichten A und C auf der Schicht B. Somit gibt es keinen direkten optischen Kontakt zwischen den Schichten A, B und C. Kein direkter optischer Kontakt besagt hier insbesondere, dass es sehr wohl zu einem teilweisen, wenn auch nicht flächendeckenden Aufliegen der Reflektorfolie auf der farblos transparenten Platte kommen kann.

Gelöst wurden die Aufgaben durch zur Verfügung stellen einer neuartigen Lichtleitfolie, die mindestens fünf Schichten aufweist. Bei diesen fünf Schichten handelt es sich um folgende, die in angegebener Reihenfolge, insbesondere mit Schicht C als vom Betrachter aus gesehen erster Schicht, angeordnet sind:
- eine Schicht A mit einer Dicke zwischen 50 und 250 µm, bei der es sich um eine transparente Schutzfolie, um eine weiße oder opak-weiße Reflektorfolie oder um eine transluzent-weiße Reflektorfolie handelt.
- eine Schicht A1, bei der es sich um eine strukturiert aufgedruckte lichtauskoppelnde Struktur, die aus einem farblosen Thermoplast, der eine Glasübergangstemperatur größer 25 °C und kleiner als die Glasübergangstemperaturen der Materialien der Schichten A und B aufweist, oder einem Reaktivklebstoff mit einer Aktivierungstemperatur zwischen 25 °C und der Glasübergangstemperatur der Materialien der Schichten A und B handelt. Dabei sind die Zwischenräume zwischen diesen Strukturen in der Schicht A1 in der Regel mit Luft gefüllt.
- eine Schicht B, die die Lichtleitschicht, bestehend aus einer farblos transparenten Folie mit einer Dicke zwischen 0,1 und 1,0 mm, darstellt.
- eine Schicht C1, die eine strukturiert aufgedruckte lichtauskoppelnde Struktur, die die gleichen Bedingungen wie die Schicht A1 erfüllt, ist. Die Schicht C1 ist jedoch dennoch nicht zwingend identisch mit der Schicht A1. Bevorzugt unterscheiden sich diese beiden Schichten zumindest in der Strukturierung.
- eine Schicht C mit einer Dicke zwischen 50 und 250 µm, bei der es sich um eine transparente Schutzfolie oder eine transluzent-weiße Schutzfolie handelt.

Bevorzugt sind die Schichten A und C jeweils aus einem thermoplastischen Material. Das gleiche gilt für die Schicht B. Dabei können die Schichten auch optional Schlagzähmodifier enthalten, bei denen es sich in der Regel um in sich teilweise vernetzte Partikel handelt.

Dabei handelt es sich bei den Schichten A1 und C1 insbesondere um Heißklebstoffe (hot melts) oder um Reaktivheißklebstoffe (reactive hot melts).

Unter opak werden Materialien verstanden, die 0 bis 10 % des Lichts transmittieren und entsprechend einen großen Anteil des Lichts reflektieren. Unter transluzent werden Materialien verstanden, die 10 bis 70 % des Lichts diffus transmittieren.

Die Schicht B in der erfindungsgemäßen Lichtleitfolie besteht bevorzugt aus Polycarbonat, einem Cycloolefincopolymer, PMMA oder einem Copolymer aus MMA und Styrol. Besonders bevorzugt besteht die farblos transparente Schicht B aus PMMA oder einem Copolymer aus MMA und Styrol, ganz besonders bevorzugt aus PMMA. PMMA bedeutet erfindungsgemäß nicht zwangsläufig, dass es um ein reines Polymer aus MMA handelt. Vielmehr enthalten viele kommerziell erhältliche PMMA, oft als Acrylglas bezeichnet, einen gewissen Anteil an Comonomeren, wie z.B. Alkylacrylaten, u.a. um die thermische Stabilität zu verbessern.

Alternativ besteht die Schicht B aus einem Blend, welcher mindestens 50 Gew% PMMA enthält. Bei der Auswahl der weiteren Blend-Bestandteile ist dabei, für den Fachmann einfach ermittelbar, darauf zu achten, dass diese eine derartige Verträglichkeit mit dem PMMA aufweisen, dass es zu keiner Störung der Transparenz kommt.

Die Schicht B hat insbesondere eine Dicke 0,1 und 1,0 mm, bevorzugt zwischen 0,25 mm und 0,75 mm und ganz besonders bevorzugt zwischen 0,25 und 0,5 mm. Ein Beispiel für das bevorzugt verwendete PMMA ist das unter dem Handelsnamen PLEXIGLAS® von der Fa. Evonik Röhm GmbH & Co. KG kommerziell erhältliche PMMA.

Insbesondere bevorzugt enthält die Schicht B keine Schlagzähmodifizierungsmittel. Genauso bevorzugt ist eine alternative Ausführungsform, in der die Schicht B Schlagzähmodifizierungsmittel mit einem Durchmesser kleiner 400 nm und einem Brechungsindex der maximal 5% von dem Brechungsindex des Matrixmaterials abweicht, enthält.

Die Schichten A und C können aus nahezu jedem beliebigen Material, bevorzugt thermoplastischen Material bestehen, wobei insbesondere Schicht C aus zumindest einem tranzluzenten und bevorzugt aus einem transparenten Material bestehen muss. Bevorzugte Beispiele für diese Materialien sind Zusammensetzungen, die überwiegend aus PET, PMMA, Polystyrol, Polyethylennaphthalat oder Polycarbonat bestehen. Eine weitere Alternative ist ein Polypropylen, welches zwei äußere Schichten aus Cycloolefincopolymeren aufweist, handelt, und dass die Schichten A und C aus dem jeweils gleichen oder aus zueinander verschiedenen Materialien bestehen.

Beispielsweise bestehen die Folien aus Poly(meth)acrylat. Unter Poly(meth)acrylat werden in diesem Zusammenhang Homo- bzw. Copolymere von Methacrylaten und/oder Acrylaten verstanden. Alternativ bestehen die erfindungsgemäß verwendeten Schichten A und/oder C aus einem Polyester. Besonders bevorzugt handelt es sich dabei insbesondere bei der Schicht A um eine Folie aus PET. Die Schichten A und C weisen bevorzugt jeweils eine Dicke zwischen 50 und 250 µm und besonders bevorzugt zwischen 50 µm und 200 µm auf. In einer weiteren, gleichfalls besonders bevorzugten Ausführungsform handelt es sich bei der Schicht A um eine Reflektorfolie in Form Partikel enthaltenen Polyester-Folie, insbesondere aus opak-weißem PET oder einer Dreischichtfolie mit einer mittleren Schicht aus Partikel enthaltenem, teilkristallinem Polypropylen (PP) und zwei äußeren Schichten aus Cycloolefincopolymeren. Eine solche Schicht A weist bevorzugt einen Reflexionsgrad von ≥ 95% auf. Bei den Partikeln handelt es sich in diesem Fall insbesondere um TiO₂, BaSO₄ oder CaCO3. Solche dreischichtigen Folien werden beispielsweise von der Firma Mitsubishi Plastics unter dem Namen Lumirex II M20 oder L20 vertrieben.

Die Reflektorfolien sind weiterhin weiß-opak oder zumindest transluzent weiß. Die Weißfärbung, unabhängig von dem Grad der Färbung zu einem opaken oder transluzenten System kann durch Zugabe von dem Fachmann bekannten Füllstoffen realisiert werden. Beispiele für solche Füllstoffe sind TiO₂, Siliziumdioxid oder Bariumsulfat. Kommerziell erhältliche Beispiele für weiß eingefärbte Reflektorfolien aus PET sind Melinex 339 von Dupont Tejin oder Hostaphan WO50 von Mitsubishi Rayon.

Für den Fall, dass das Licht nur über eine Lichtaustrittsfläche ausgekoppelt wird, liegt die Schicht A bevorzugt als Reflektorfolie, insbesondere bevorzugt weiß-opak vor. Für den Fall, dass das Licht teilweise auch auf der Rückseite der Schicht A ausgekoppelt werden soll, muss diese transluzent weiß sein und einen entsprechend hohen Lichttransmissionsgrad aufweisen.

Insbesondere bei der Schicht C und alternativ zu einer Reflektorfolie auch bei der Schicht A kann es sich um eine transparente Schutzfolie mit einem Lichttransmissionsgrad T ≥ 90 % handeln. Bevorzugt weist eine solche Schicht eine Antiglareoberfläche auf. Alternativ oder zusätzlich kann eine solche Schicht 1 bis 25 Gew% Streumittel enthalten.

Weiterhin alternativ kann es sich bei der Schicht A und/oder bei der Schicht C um eine transluzente Schutzfolie, die eine Mikrostrukturierung aufweist, handeln. Alternativ oder zusätzlich kann eine solche Schicht direkt 10 bis 60 Gew% Streumittel enthalten und/oder eine oder zwei coextrudierte Schichten aufweisen, die 10 bis 60 Gew% Streumittel enthalten.

Insgesamt kann es sich bei den Schichten A und C um identische Schichten in Bezug auf die Zusammensetzung der Schichten und deren Dicke handeln. Diese Ausführung spielt insbesondere für die Anwendung als Light Panel, mit dem Licht gleichmäßig in beide Richtungen abgestrahlt werden soll, eine Rolle.

Bevorzugt sind die Schichten A und C jedoch verschieden zueinander aufgebaut. In einem solchen Aufbau kann es sich bei der Schicht A beispielsweise um eine Reflektorfolie, eine transluzente Schutzfolie oder um eine transparente Schutzfolie und bei der Schicht C davon abweichend um eine transluzente oder eine transparente Schutzfolie handeln.

Weiterhin ist es möglich, dass die Schicht A und/oder die Schicht C eine Anti-Fingerprint-, eine Hardcoat-, eine Easy-to-Clean- und/oder eine Anti-Glare-Beschichtung tragen. Dabei können auch mehrere dieser Beschichtungen oder Schichten mit Kombinationen aus diesen Funktionen vorliegen. Insbesondere haben diese Beschichtungen für die Schicht C eine Bedeutung. Für den Fall, dass Liight Panels, die das Licht in beide Richtungen abstrahlen, natürlich sind die Beschichtungen für beide Schichten A und C interessant.

Überraschend kann bei Verwendung einer solchen erfindungsgemäßen Lichtleitfolie auf eine zusätzliche Schicht zur Reflektion bzw. anders gesehen auf eine zusätzlich Kaschierfolie zum Schutz der Störstellen verzichtet werden, da bei diesem Aufbau die Schichten A und C, zum Beispiel als Reflektorfolie und transparente Schutzfolie, gleichzeitig als Schutz für die als Strukturen zur Lichtauskopplung verwendeten aufgedruckten Thermoplasten und zur Reflektion des Lichts dienen. Weiterhin hat die erfindungsgemäße Lichtleitplatte den Vorteil, dass die Bedruckung mit Thermoplasten sowohl gegenüber Abrieb als auch gegen äußere Einflüsse wie Feuchtigkeit, Chemikalien oder Witterungseinflüsse geschützt ist. Insbesondere hat die erfindungsgemäße Lichtleitplatte den großen Vorteil gegenüber dem Stand der Technik, dass die Auskopplung des Lichtes mit der Reflektorfunktion in einer modifizierten Schicht miteinander gekoppelt wird.

Der aufgedruckte Thermoplast, der in der fertigen Lichtleitfolie in den Schichten A1 und C1 die Funktion von Störstellen zur Brechung und Auskopplung der Lichts auf der Ansichtsseite der Lichtleitplatte hat, kann auf jedem thermoplastischen Material basieren, welches eine Glasübergangstemperatur von über 25 °C und unterhalb der Erweichungstemperaturen der Schicht B, bevorzugt der Schichten A, B und C liegt, wobei es sich bei der Erweichungstemperatur um Glasübergangstemperaturen oder Schmelztemperaturen handeln kann. Bei Verwendung eines thermisch aktivierten Reaktivklebers (reactive hot melt) muss die thermische Aktivierung ebenfalls oberhalb 25°C und unterhalb der Schmelztemperatur der entsprechenden Schichten A, B und C liegen. Weiterhin muss der Fachmann bei der Auswahl berücksichtigen, dass der Thermoplast oder Reaktivkleber nicht durch das jeweilige Druckverfahren beschränkt wird. Der Brechungsindex des aufgedruckten Thermoplasten oder Reaktivklebers kann prinzipiell kleiner, gleichgroß oder größer als der Brechungsindex der Schicht B sein. Bevorzugt ist der Brechungsindex jedoch gleichgroß oder größer als der Brechungsindex des Materials der Schicht B, da dadurch die Effizienz der Lichtauskopplung erhöht wird.

In einer alternativen, aber keinesfalls zwingenden Ausführungsform der vorliegenden Erfindung kann der aufgedruckte Thermoplast zusätzlich Streupartikel aufweisen. Mittels der Streupartikel wird die Lichtstreuung im aufgedruckten Thermoplasten beeinflusst, so dass der Fachmann eine möglichst gleichmäßigen Lichtauskopplung durch Abstimmung folgender Parameter leicht einstellen kann: Größe der Störstellen, Verteilung der Störstellen, Brechungsindex des Thermoplasten der Störstellen im Verhältnis zum Brechungsindex des Materials der Schicht B, Zusammensetzung der Schichten A bzw. C und schließlich Art, Größe und Menge optionaler Streupartikel.

Bei den Streupartikeln kann es sich sowohl um organische als auch um anorganische Streupartikel handeln. Entscheidend ist, dass die Größe und der Brechungsindex der Partikel so gestaltet sind, dass sichtbares Licht gestreut wird. Bei organischen Partikeln kann es sich beispielsweise um PMMA-Suspensionspolymerisate handeln. Bei anorganischen Streupartikeln handelt es sich in der Regel um Partikel aus Titandioxid, Siliziumdioxid oder Bariumsulfat. Insgesamt sind solche Streupartikel dem Fachmann bekannt und einfach auszuwählen.

Die Form der aufgedruckten Störstellen ist zumeist rund, rechteckig, streifenförmig, hexagonal oder quadratisch. Das Druckbild entspricht in der Regel einer typischen Punktoder sonstigen Struktur, wie man sie typischerweise auf Lichtleitplatten für BLUs und Lichtpaneelen findet. Dabei liegt die Bedruckung bevorzugt in mindestens einer der beiden Schichten A1 oder C1 mit einer von den Kanten ausgehend, durch die Licht eingekoppelt wird, zunehmenden Anzahl und/oder Größe der Störstellen vor. So sind die größten und/oder meisten Strukturen bei einer Lichtleitplatte, in die das Licht von links eingekoppelt wird, auf der rechten Kante zu finden. Entsprechend finden sich bei einer Lichtleitplatte, in die von allen vier Kanten Licht eingekoppelt wird, die größten und/oder meisten Strukturen in der Mitte der Lichtleitplatte.

Bevorzugt sind die Strukturierungen der beiden Schichten A1 und C1 verschieden zueinander. Besonders bevorzugt weist die Strukturierung der Schicht A1 einen Gradienten der Strukturverteilung, wie zuvor beschrieben, auf. Gleichzeitig bevorzugt ist dann die Strukturierung der Schicht C1 gleichmäßig.

Die Ausdehnungen der Strukturen der Störstellen in die beiden der Lichtleitfolie parallelen Dimensionen entsprechen den in solchen System dem Fachmann bekannten Ausdehnungen. Die Dicke der Strukturen zwischen der farblos transparenten Platte und der Reflektorfolie und damit die Ausdehnung der Strukturen in die dritte, zur Schicht B senkrechten Dimension liegt zwischen 0,5 und 200 µm, bevorzugt zwischen 1 und 30 µm. Idealerweise entspricht diese Dicke damit auch dem Abstand der zueinander gerichteten Oberflächen der Schichten A zu B bzw. B zu C in der Lichtleitfolie.

Die Kanten der erfindungsgemäßen Lichtleitfolie werden mittels Lichtquelle(n) beleuchtet und liegen damit in der Funktion einer Lichteinleitungsfläche vor. Dabei kann das Licht über eine, zwei, drei oder sogar alle vier Kanten in die Lichtleitfolie eingekoppelt werden. Das Licht wird über mindestens eine der beiden senkrecht zu den Kanten stehenden Oberflächen, den Lichtaustrittsflächen, wieder abgegeben. Der Begriff Lichtaustrittsfläche kennzeichnet hierbei eine Fläche der Lichtleitfolie, die geeignet ist, Licht abzustrahlen. Die Lichteinleitungsfläche wiederum ist in der Lage, Licht in die Lichtleitplatte aufzunehmen, so dass die lichtleitende Schicht das eingeleitete Licht über die gesamte Lichtaustrittsfläche verteilen kann. Bei den Lichtquellen handelt es sich insbesondere um Mikro-LEDs.

Für Ausführungsformen, bei denen das Licht nicht über alle vier Kanten bzw. nur über Teile von Kanten eingekoppelt wird, sind die Kanten, durch die kein Licht eingekoppelt wird, bevorzugt ganz oder teilweise mit einer reflektierenden Schicht ausgestattet. Bei dieser reflektierenden Schicht kann es sich um eine der weiter oben beschriebenen Reflektorfolie entsprechende Folie, eine Verspiegelung bzw. Metallisierung oder aber auch um einen weiß-opak gefärbten Lack handeln.

Ein weiterer Aspekt der vorliegenden Erfindung ist das Verfahren zur Herstellung der erfindungsgemäßen Lichtleitfolien. Bei diesem Verfahren wird in einem ersten Verfahrensschritt aus einem farblos transparenten Material mittels Extrusion mit einem Glättwerk die Schicht B hergestellt. In einem zweiten, optional inline durchgeführten Verfahrensschritt wird auf diese Schicht B eine mit der Schicht A1 bedruckte Schicht A, mit der Schicht A1 in Richtung der Schicht B ausgerichtet, laminiert. Im gleichen Arbeitsgang oder nach dem Wenden dieses Laminats um 180° wird auf die andere Seite der Schicht B eine mit der Schicht C1 bedruckte Schicht C, mit der Schicht C1 in Richtung der Schicht B ausgerichtet, laminiert.

Einfacher zu realisieren als eine inline-Lamination ist eine nachträgliche Lamination der Schichten A und C auf die Schicht B in einem getrennten Verfahren. Hier können beide Laminationsschritte direkt nacheinander erfolgen oder eine dritte getrennte Lamination der Schicht C durchgeführt werden.

Bevorzugt wird die so hergestellte Lichtleitfolie nach der letzten Lamination inline in Stücke gesägt, geschnitten oder auf eine Rolle gewickelt. Bei dem Aufrollen auf eine Rolle muss diese dabei derart dimensioniert sein, dass die fertige Lichtleitfolie beim Aufrollen keinen zu großen Spannungen unterliegt. Um eine exakte Positionierung des Werkzeugs, wie z.B. einer Säge für die Zuschnitte zu ermöglichen, können zusätzlich zu den weißen, bzw. farblosen Auskoppelstrukturen auch noch andersfarbige Positionsmarken bevorzugt auf der Rückseite der Reflektorfolie gedruckt werden.

Erfindungsgemäß zeichnet sich das Verfahren weiterhin dadurch aus, dass die Bedruckung nach der Lamination dergestalt zwischen der Schicht B und den Schichten A bzw. C befindet, dass ein optischer Kontakt zwischen Schichten B und A bzw. C über die Schichten A1 bzw. C1 hergestellt wird und dass es dabei keinen direkten optischen Kontakt zwischen den Schichten B und A bzw. C gibt..

Das Verfahren ist deutlich zeit- und kosteneffizienter durchzuführen als Verfahren des Standes der Technik und führt zusätzlich zu einem Schutz für die Bedruckung. Dies wird dadurch erreicht, dass die optischen Störstellen zunächst auf die Schichten A und C gedruckt werden. Darauf werden die Schichten A bzw. C mit dem Druckmuster in der Weise ganzflächig auf die Schicht B laminiert, dass die optischen Störstellen sich zwischen Schicht B und Schicht A bzw. C in Form eines Spacers befinden. Der Druck auf die Schichten A und C wird bevorzugt mittels eines üblichen Foliendruckverfahrens durchgeführt. Insbesondere wird die Bedruckung mit einem preiswerten Massendruckverfahren wie zum Beispiel dem Rollentiefdruck aufgebracht. Das Bedrucken kann offline in einem getrennten Verfahren, z.B. als integraler Bestandteil der Folienextrusion erfolgen. Alternativ ist es jedoch auch möglich, dass die Bedruckung der Schichten A und C online, vor der Lamination auf die Schicht B erfolgt.

Die Schicht B kann alternativ zur beschriebenen und bevorzugten Extrusion mittels eines (kontinuierlichen) Gussverfahrens hergestellt werden und liegt dann zunächst in Form eines unendlichen Polymerbandes vor.

Bei der Lamination, d.h. direkt nach Auflage der bedruckten Schicht A bzw. C auf die Schicht B mit der Bedruckung zwischen den jeweiligen Schichten werden diese Schichten derart durch Walzen geführt, dass eine Anhaftung des gedruckten Thermoplasten auf der Schicht B erfolgt. Temperatur, Shorehärte der Gummiwalze und Walzendruck müssen dabei so gewählt sein, dass es zu keinem dauerhaften direkten optischen Kontakt zwischen den unbedruckten Stellen der jeweiligen Schichten kommt. Dabei ist bevorzugt die Seite der führenden Walze gegenüber Schicht A bzw. C, bei der es sich insbesondere um eine Gummiwalze handelt, zugewandt.

Das abgekühlte Laminat aus den Schichten A, A1, B, C1 und C kann nach dem Abkühlen zugeschnitten oder auf eine Rolle aufgewickelt werden und weiter veredelt werden. Als Veredelung können beispielsweise die Kanten poliert oder wie bereits beschrieben mit einem reflektierenden Lack oder einer reflektierenden Folie bzw. einem Klebeband versehen werden.

Dieses neuartige Inlinelaminationsverfahren und eine damit hergestellte Lichtleitplatte kombinieren die Vorteile eines geringen Arbeitsaufwandes bei der Herstellung der Strukturen durch einen Inlineprozess, jedoch ohne die Nachteile hoher Investitions- und Instandhaltungskosten. Zudem ist bei diesem Verfahren ein Wechsel der Struktur wesentlich einfacher, in weniger Prozessschritten durchführbar als bei einer Strukturierung über Walzen, da Strukturwechsel während des laufenden Herstellungsprozesses des Lamiants, beispielsweise einfach durch Wechsel der Schichten A bzw. C durchgeführt werden können. Insbesondere ist der Druck auf eine flexible Folie von Rolle zu Rolle sehr schnell und kostengünstig mit gängigen Foliendrucktechniken realisierbar.

Vor oder bei dem Einbau in ein Endgerät werden die Kanten analog dem Stand der Technik mit einer oder mehreren Beleuchtungseinheiten ausgestattet. Die Lichtquellen können zur besseren Bestrahlung des Lichtleitkörpers mit Reflektoren ausgestattet sein. Bevorzugt handelt es sich bei diesen Lichtquellen um Mikro-LED.

Die erfindungsgemäßen Lichtleitfolien haben überraschend den zusätzlichen technischen Vorteil, dass diese das Licht mit einer gleichmäßigen Intensitätsverteilung zwischen 0 und 60° auskoppeln. Damit ist bei Verwendung einer erfindungsgemäßen Lichtleitfolie eine Streufolie oder -platte nur noch nötig, um die Lichtleitplatte vor Staub oder Verkratzen zu schützen, und um den Lichteindruck zusätzlich gleichmäßiger erscheinen zu lassen. Diese Streufolien oderplatten müssen dazu im Vergleich zum Stand der Technik jedoch nur noch sehr geringe Mengen an Streupartikeln enthalten. Alternativ ist es sogar möglich, den Eindruck dadurch zu erzielen, dass die Streufolie oder -platte auf der Seite des Betrachters oberflächenbehandelt ist, diese Oberflächenbehandlung kann bei der Extrusion beispielsweise mittels einer strukturierten oder gummierten Walze erzielt werden. In dieser letzten Ausführungsform können die Streufolien bzw. -platten dann komplett ohne Streupartikel eingesetzt werden. Damit haben die Lichtleitfolie gemäß vorliegender Erfindung den zusätzlichen großen Vorteil, dass die Verwendung dieser die Lichtausbeute, z.B. in Beleuchtungssystem auf Mikro-LED-Basis, zusätzlich steigern.

Die erfindungsgemäßen Lichtleitfolien, bzw. die damit hergestellten Vorrichtungen zum Transport von Licht finden bevorzugt als Hinterleuchtung in LCD-Bildschirmen Verwendung. Bei der Hinterleuchtung eines LCD-Bildschirms werden bevorzugt auf der Leuchtseite noch Streu- und Lichtlenkfolien auf die Lichtleitplatte aufgelegt.

Ganz besonders bevorzugt ist eine Verwendung als Lichtpaneele. Bei Lichtpaneelen wird üblicherweise eine diffus streuende Platte bzw. Folie oder eine mikrostrukturierte Folie vor die Leuchtseite montiert, um die Abstrahlcharakteristik des Leuchtpanels gezielt zu beeinflussen. Die erfindungsgemäßen Lichtleitfolien ermöglichen insbesondere in dieser Anwendung eine neuartige, sehr breite Gestaltungsvielfalt von Beleuchtungseinheiten. Ganz besonders bevorzugt findet die erfindungsgemäße Lichtleitfolie Verwendung als Beleuchtung, insbesondere Beleuchtung im Automobilbereich, insbesondere im Automobilinnenraum.

Weiterhin können die erfindungsgemäßen Lichtleitfolien auch als Hinterleuchtung von Hinweis- oder Reklameschildern eingesetzt werden. Bei Hinweis- oder Reklameschildern wird üblicherweise eine farbig transparente oder transluzente Folie auf die Leuchtseite der Lichtlenkplatte montiert. Diese wird dann durch das Lichtpanel hinterleuchtet.

### Bezugszeichen zu den Zeichnungen

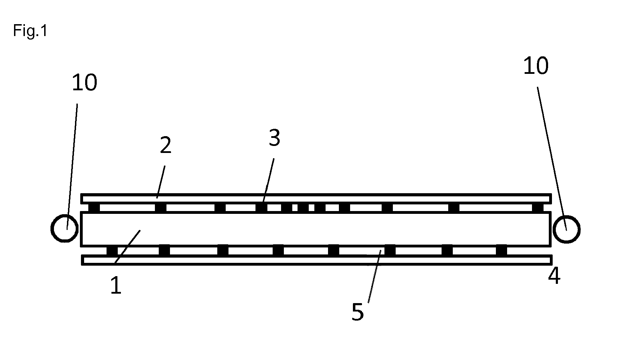

Fig.1 stellt beispielhaft eine erfindungsgemäße Lichtleitfolie und zwei Lichtquellen zur Lichteinspeisung dar.

Folgende Bezugszeichen wurden in den Zeichnungen verwendet:
1 Schicht B
2 Schicht C
3 Schicht C1: mit Gradient aufgedruckter Thermoplast oder Reaktivklebstoff
4 Schicht A
5 Schicht A1: ohne Gradient aufgedruckter Thermoplast oder Reaktivklebstoff
10 Lichtquelle

## Patentansprüche

1. Lichtleitfolie, bestehend aus mindestens fünf Schichten, **dadurch gekennzeichnet, dass** es sich bei diesen fünf Schichten in der aufgeführten Reihenfolge um
- eine Schicht A mit einer Dicke zwischen 50 und 250 µm, bei der es sich um eine transparente Schutzfolie, um eine weiße oder opak-weiße Reflektorfolie oder um eine transluzent-weiße Reflektorfolie handelt,
- eine Schicht A1, eine strukturiert aufgedruckte lichtauskoppelnde Struktur, die aus einem farblosen Thermoplast, der eine Glasübergangstemperatur größer 25 °C und kleiner als die Glasübergangstemperaturen der Materialien der Schicht A und B aufweist, oder einem Reaktivklebstoff mit einer Aktivierungstemperatur zwischen 25 °C und der Glasübergangstemperatur der Materialien der Schicht A und B,
- eine Schicht B, der Lichtleitschicht, bestehend aus einer farblos transparenten Folie mit einer Dicke zwischen 0,1 und 1,0 mm,
- eine Schicht C1, eine strukturiert aufgedruckte lichtauskoppelnde Struktur, die die gleichen Bedingungen wie die Schicht A1 erfüllt, mit dieser jedoch nicht identisch sein muss, und
- eine Schicht C mit einer Dicke zwischen 50 und 250 µm, bei der es sich um eine transparente Schutzfolie oder um eine transluzent-weiße Schutzfolie handelt, und dass
es keinen direkten optischen Kontakt zwischen den Schichten A, B und C gibt.

2. Lichtleitfolie gemäß Anspruch 1, **dadurch gekennzeichnet, dass** die Schicht B aus Polycarbonat, einem Cycloolefincopolymer, PET, einem Polyamid, PMMA oder einem Copolymer aus MMA und Styrol besteht.

3. Lichtleitfolie gemäß Anspruch 1 oder 2, **dadurch gekennzeichnet, dass** Schicht B aus PMMA oder einem Copolymer aus MMA und Styrol besteht, und dass Schicht B keine Schlagzähmodifizierungsmittel aufweist oder Schlagzähmodifizierungsmittel mit einem Durchmesser kleiner 400 nm und einem Brechungsindex der maximal 5% von dem Brechungsindex des Matrixmaterials abweicht, enthält.

4. Lichtleitfolie gemäß mindestens einem der Ansprüche 1 bis 3, **dadurch gekennzeichnet, dass** es sich bei dem Material, aus denen die Schichten A und C überwiegend zusammengesetzt sind, um PET, PMMA, Polycarbonat, Polystyrol, Polyethylennaphthalat oder um Polypropylen, welches zwei äußere Schichten aus Cycloolefincopolymeren aufweist, handelt, und dass die Schichten A und C aus dem jeweils gleichen oder aus zueinander verschiedenen Materialien bestehen.

5. Lichtleitfolie gemäß Anspruch 4, **dadurch gekennzeichnet, dass** Schicht A eine Reflektorschicht ist und überwiegend aus opak-weißem PET besteht oder es sich um eine Polypropylenschicht, welche zwei äußere Schichten aus Cycloolefincopolymeren aufweist, handelt, dass die Schicht einen Reflexionsgrad von ≥ 95% aufweist.

6. Lichtleitfolie gemäß Anspruch 4, **dadurch gekennzeichnet, dass** es sich bei der Schicht A und/oder bei der Schicht C um eine transparente Schutzfolie mit einem Lichttransmissionsgrad T ≥ 90 % handelt, und dass die Schicht eine Antiglareoberfläche aufweist und/oder 1 bis 25 Gew% Streumittel enthält.

7. Lichtleitfolie gemäß Anspruch 4, **dadurch gekennzeichnet, dass** es sich bei der Schicht A und/oder bei der Schicht C um eine transluzente Schutzfolie, die eine Mikrostrukturierung aufweist, 10 bis 60 Gew% Streumittel enthält und/oder eine oder zwei coextrudierte Schichten, enthaltend 10 bis 60 Gew% Streumittel, aufweist.

8. Lichtleitfolie gemäß Anspruch 4, **dadurch gekennzeichnet, dass** die Schichten A und C verschieden aufgebaut sind und dass es sich bei der Schicht A um eine Schicht gemäß einem der Ansprüche 5 bis 7 und bei der Schicht C um eine Schicht gemäß Anspruch 6 oder 7 handelt.

9. Lichtleitfolie gemäß mindestens einem der Ansprüche 1 bis 8, **dadurch gekennzeichnet, dass** die Schicht A und/oder die Schicht C eine Anti-Fingerprint-, Hardcoat-, Easy-to-Clean- und/oder Anti-Glare-Beschichtung aufweist.

10. Lichtleitfolie gemäß mindestens einem der Ansprüche 1 bis 9, **dadurch gekennzeichnet, dass** der aufgedruckte Thermoplast einen Brechungsindex aufweist, der gleich oder größer als der Brechungsindex des Materials der Schicht B ist.

11. Lichtleitfolie gemäß mindestens einem der Ansprüche 1 bis 10, **dadurch gekennzeichnet, dass** der aufgedruckte Thermoplast zusätzlich organische oder anorganische Streupartikel aufweist.

12. Lichtleitfolie gemäß mindestens einem der Ansprüche 1 bis 11, **dadurch gekennzeichnet, dass** die Schichten A1 bzw. C1 eine Strukturierung, die rund, rechteckig, streifenförmig, hexagonal oder quadratisch ist, aufweisen, und dass diese Strukturierungen in mindestens einer der beiden Schichten A1 oder C1 mit einer von den Kanten, durch die Licht eingekoppelt wird, ausgehend zunehmenden Anzahl und/oder Größe der Strukturen aufgedruckt sind.

13. Lichtleitfolie gemäß mindestens einem der Ansprüche 1 bis 12, **dadurch gekennzeichnet, dass** der aufgedruckte Thermoplast zwischen der Schicht B und den Schichten A bzw. C jeweils eine Dicke zwischen 0,5 und 200 µm, bevorzugt zwischen 1 und 30 µm aufweist.

14. Lichtleitfolie gemäß mindestens einem der Ansprüche 1 bis 13, **dadurch gekennzeichnet, dass** die Kanten, durch die kein Licht eingekoppelt wird, ganz oder teilweise mit einer reflektierenden Schicht ausgestattet sind.

15. Lichtleitfolie gemäß Anspruch 12, **dadurch gekennzeichnet, dass** die Strukturierungen der beiden Schichten A1 und C1 verschieden zueinander sind.

16. Lichtleitfolie gemäß Anspruch 15, **dadurch gekennzeichnet, dass** die Strukturierung der Schicht A1 einen Gradienten der Strukturverteilung gemäß Anspruch 12 aufweist, und dass die Strukturierung der Schicht C1 gleichmäßig ist.

17. Verwendung einer Lichtleitplatte gemäß mindestens einem der Ansprüche 1 bis 16 und mindestens einer Lichtquelle als Hinterleuchtung in LCD-Bildschirmen.

18. Verwendung einer Lichtleitplatte gemäß mindestens einem der Ansprüche 1 bis 16 und mindestens einer Lichtquelle als Lichtpaneelen oder als Hinterleuchtung von Hinweis- oder Reklameschildern.

19. Verwendung einer Lichtleitplatte gemäß mindestens einem der Ansprüche 1 bis 16 und mindestens einer Lichtquelle zur Beleuchtung in Automobilbau, insbesondere im Automobilinnenraum.
